# FASCICULE DE BREVET EUROPEEN

(11) **EP 0 791 144 B1**
(45) Date de publication et mention de la délivrance du brevet: **23.08.2000**
(21) Numéro de dépôt: 95934688.3
(22) Date de dépôt: 12.10.1995
(51) Int. Cl.: F16D 65/22

(54) **DISPOSITIF D'ACTIONNEMENT MECANIQUE POUR FREIN A TAMBOUR**
MECHANISCHE BETÄTIGUNGSEINRICHTUNG FÜR EINE TROMMELBREMSE
MECHANICAL ACTUATION DEVICE FOR DRUM BRAKES

(30) Priorité: 09.11.1994 FR 9413435
(43) Date de publication de la demande: 27.08.1997
(73) Titulaire: Bosch Systemes de Freinage, 93700 Drancy (FR)
(72) Inventeur: MALIGNE, Jean, Charles, F-93300 Aubervilliers (FR)
(86) Numéro de dépôt international: FR9501331
(87) Numéro de publication internationale: WO9615387

(56) Documents cités:
- EP-A- 0 419 171
- FR-A- 2 697 599
- FR-A- 2 697 600

## Description

La présente invention concerne les freins à tambour, destinés en particulier à assurer le freinage des véhicules automobiles. Ces freins à tambour comportent de façon générale un dispositif d'actionnement hydraulique constituant le moteur principal de frein, et un dispositif d'actionnement mécanique, constituant un moteur auxiliaire de frein, pour assurer par exemple les fonctions de frein de parc ou de frein de secours.

De façon classique, les freins à tambour comportent une plaque support solidaire d'une partie fixe du véhicule telle qu'un porte-fusée, et un tambour solidaire de la roue à freiner. Deux segments, comportant chacun une âme et une jante pourvue d'une garniture de friction, sont montés coulissants sur la plaque support.

Un dispositif d'actionnement hydraulique est généralement constitué d'un cylindre de roue, qui comporte deux pistons coulissant dans un alésage et définissant entre eux une chambre étanche dans laquelle une élévation de pression provoque un écartement des pistons, et donc des segments dont les âmes sont maintenues en appui sur les pistons par des ressorts.

Un dispositif d'actionnement mécanique est généralement constitué d'un levier, monté pivotant sur l'une des âmes, l'extrémité d'un des bras est reliée à un câble de manoeuvre, et l'autre bras du levier agit sur une biellette en appui sur l'autre segment au moyen de ressorts, de sorte que la rotation de ce levier provoque l'écartement des segments.

Selon une conception de frein à tambour, le dispositif d'actionnement est disposé entre une première extrémité des âmes des segments, tandis qu'une seconde extrémité des âmes des segments porte sur une pièce d'appui solidaire de la plaque support. Une telle conception est connue dans la technique sous l'expression " à segments flottants ", dûe au fait de l'absence d'ancrage des âmes des segments sur la pièce d'appui. Elle procure une très grande stabilité du frein à tambour, mais elle nécessite une force d'actionnement très importante.

Selon une autre conception, connue dans la technique sous l'appellation " duo-servo ", le dispositif d'actionnement est disposé entre une première extrémité des âmes des segments, les autres extrémités des âmes des segments étant articulées l'une sur l'autre, la plaque support étant dépourvue de pièce d'appui. Cette conception confère au frein à tambour une efficacité très élevée, mais une stabilité très médiocre.

On connaît, par exemple des documents FR-A-2 697 599, FR-A-2 697 600 ou EP-A-0 419 171, des freins à tambour combinant ces deux conceptions, c'est à dire où le dispositif d'actionnement hydraulique est du type à segments flottants, et où le dispositif d'actionnement mécanique est du type duo-servo.

Les freins à tambour ainsi réalisés réunissent ainsi les avantages des deux technologies tout en éliminant leurs inconvénients. Cependant, cette réunion fait naître un autre inconvénient.

En effet, dans tout frein à tambour, la réunion de dispositifs d'actionnement hydraulique et d'actionnement mécanique impose de disposer d'un système de rattrapage automatique d'usure, pour que la course du dispositif d'actionnement mécanique soit constante, quelle que soit l'usure des garnitures de friction.

Un système de rattrapage automatique d'usure est classiquement constitué d'un système à vis-écrou monté sur la biellette du dispositif d'actionnement mécanique, disposée entre les âmes des segments, généralement au voisinage du dispositif d'actionnement hydraulique, de telle sorte que la longueur de la biellette soit augmentée, lors d'un actionnement hydraulique, si les âmes des segments s'écartent d'une distance supérieure à une valeur prédéterminée, consécutivement à une usure des garnitures de friction. La course du système d'actionnement mécanique garde ainsi une valeur sensiblement constante.

Lors du démontage du frein à tambour, par exemple pour des opérations d'entretien ou de changement des segments ou du tambour, il suffit de faire pivoter le levier du dispositif d'actionnement mécanique dans le sens contraire à celui de son actionnement normal pour que les segments se rapprochent l'un de l'autre sous l'action des différents ressorts de traction utilisés dans le frein à tambour. De la sorte, les segments, et en particulier les garnitures de friction, sortent radialement de la piste qu'elles ont creusée dans la face interne du tambour, et il est alors possible de les extraire axialement du frein à tambour.

Or, dans les freins à tambour mentionnés plus haut, où le dispositif d'actionnement hydraulique est du type à segments flottants et le dispositif d'actionnement mécanique du type duo-servo, ce dernier dispositif impose la présence sur l'âme d'un des segments d'un dispositif de transmission de force qui, lorsque le frein à tambour est actionné mécaniquement, prend appui sur la biellette de longueur variable et sur une pièce de liaison, toutes deux en appui sur l'âme de l'autre segment.

Ce dispositif de transmission de force ne peut pas être basculé ou pivoté sur le segment qui le porte, de sorte que l'extraction du tambour, lors du démontage du frein à tambour, ne peut avoir lieu qu'en dévissant manuellement l'écrou du système à vis-écrou pour réduire la longueur de la biellette de longueur variable, afin que les segments se rapprochent et que les garnitures de friction puissent sortir de la piste de frottement formée sur le tambour.

La présente invention a donc pour objet de réaliser un frein à tambour, dans lequel le dispositif d'actionnement hydraulique est du type à segments flottants et le dispositif d'actionnement mécanique est du type duo-servo, et dans lequel le démontage du tambour peut être effectué très simplement et en toutes circonstances, sans nuire par ailleurs à la fiabilité du fonctionnement du frein à tambour et sans en augmenter de façon significative le coût de fabrication.

Dans ce but, la présente invention propose un frein à tambour comportant une plaque support sur laquelle sont montés coulissants deux segments comportant chacun une âme et une jante dont la face en regard du tambour reçoit une garniture de friction susceptible d'être amenée en engagement de friction contre une face interne du tambour par un dispositif d'actionnement hydraulique agissant sur une première extrémité des âmes des segments, une biellette de longueur variable déterminant, en coopération avec un ressort de traction, l'écartement des segments et étant disposée au voisinage du dispositif d'actionnement hydraulique, une seconde extrémité des âmes des segments portant, lorsque le frein à tambour est au repos ou actionné hydrauliquement, sur une pièce d'appui solidaire de la plaque support, le frein à tambour comportant en outre un dispositif d'actionnement mécanique pour amener les garnitures de friction en engagement de friction contre la face interne du tambour et les âmes des segments en éloignement de la pièce d'appui au moyen d'un dispositif de transmission de force monté sur l'âme d'un premier segment et prenant appui, lorsque le frein à tambour est actionné mécaniquement, sur l'âme d'un second segment par l'intermédiaire d'une part de la biellette de longueur variable et d'autre part d'un moyen de liaison entre les deux segments.

Selon l'invention, un étrésillon est disposé sur l'âme du premier segment et comporte une partie active interposée de façon escamotable entre la première extrémité de l'âme du premier segment et une extrémité du dispositif de transmission de force.

De façon avantageuse, cet étrésillon est disposé de façon escamotable entre ces deux pièces, et de préférence de façon pivotante. Il est alors possible de déplacer l'étrésillon entre une première position où une partie active de l'étrésillon est intercalée entre le dispositif de transmission de force et l'âme du premier segment et écarte l'âme du premier segment de l'extrémité de la biellette de longueur variable, et une deuxième position où l'âme du premier segment est en appui sur l'extrémité de la biellette de longueur variable sous l'action du ressort de traction.

Ainsi, lorsque l'étrésillon est amené dans sa deuxième position, sa partie active n'est plus située entre l'âme du premier segment et le dispositif de transmission de force, de sorte que le premier segment peut se rapprocher de l'autre segment en venant en appui sur la biellette de longueur variable, de sorte qu'il devient possible d'extraire les segments du frein à tambour ainsi équipé, de la même façon que pour un frein à tambour traditionnel.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de face d'un frein à tambour réalisé conformément à la présente invention, le tambour ayant été omis;
- La Figure 2 représente une vue en coupe selon la ligne II-II de la Figure 1;
- La Figure 3 représente une vue en perspective d'un levier d'actionnement mécanique utilisé dans le frein à tambour de la Figure 1;
- La Figure 4 représente une vue en perspective d'un levier de répartition de forces utilisé dans le frein à tambour de la Figure 1;
- La Figure 5 représente à plus grande échelle un détail de la Figure 1;
- Les Figures 6A et 6B représentent deux vues en perspective d'un étrésillon utilisé dans le frein à tambour de la Figure 1;
- La Figure 7 représente une vue semblable à celle de la Figure 5, dont certains éléments ont été omis pour faciliter la compréhension du dessin, et où l'étrésillon occupe une première position, et
- La Figure 8 représente une vue semblable à celle de la Figure 7, où l'étrésillon occupe une deuxième position.

Le frein à tambour représenté sur les Figures, correspondant par exemple à celui qui est décrit dans le document FR-A-2 697 600 précité, comporte une plaque support 10 constituée d'un disque sensiblement plan. Cette plaque support est prévue pour être solidarisée à une partie fixe d'un véhicule telle qu'un porte-fusée (non représenté).

Deux segments de frein 12 et 14 sont supportés de façon coulissante sur la plaque support, par des moyens connus (non représentés). De façon classique, chaque segment est constitué d'une âme 12a et 14a respectivement, sensiblement plane, sur laquelle est fixée une jante 12b et 14b respectivement, en forme d'arc de cercle supportant sur sa face extérieure une garniture de friction 16 et 18 respectivement.

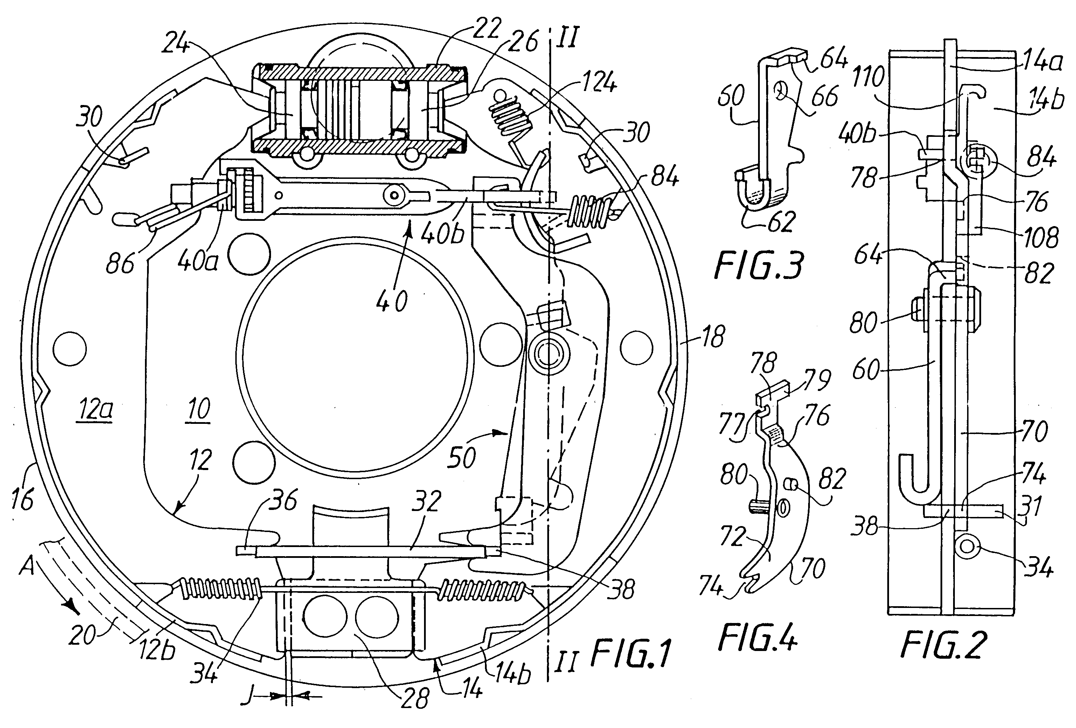

Les segments 12 et 14 sont placés sur la plaque support 10 de telle façon que les enveloppes extérieures des garnitures 16 et 18 soient situées sur un même cercle dont l'axe est confondu avec l'axe de la plaque support 10, de sorte que les garnitures 16 et 18 peuvent venir en contact avec la surface intérieure d'un tambour de frein 20 coiffant les deux segments et représenté partiellement en tirets sur la Figure 1. Le tambour 20 est concentrique aux garnitures 16 et 18 et il est fixé à une partie tournante du véhicule telle qu'une roue (non représentée).

Un moteur de frein 22, à commande hydraulique, est fixé sur la plaque support 10, entre deux premières extrémités adjacentes des segments 12 et 14. Le moteur de frein 22 est muni de deux pistons 24 et 26 qui fonctionnent en opposition de façon à exercer une poussée sur l'extrémité correspondante de l'âme 12a, 14a de chacun des segments lorsque le moteur de frein est actionné.

Une pièce d'appui 28, également fixée sur la plaque support 10, est placé entre les deux autres extrémités adjacentes des segments 12 et 14.

Un ressort de traction 30 dont seules les extrémités ont été représentées sur la Figure 1, est interposé entre les extrémités des âmes des segments entre lesquelles est placé le moteur de frein 22, à proximité immédiate de ce dernier, pour rapprocher ces extrémités l'une de l'autre lorsque le moteur de frein est au repos.

Une entretoise 32 de longueur fixe est disposée entre les segments 12 et 14 au voisinage de la pièce d'appui 28, sensiblement parallèlement à l'axe du moteur de frein 22, et comporte à ses extrémités des échancrures 36 et 38 coopérant avec des échancrures correspondantes formées dans les âmes des segments 12 et 14 respectivement. Un ressort de traction 34 interposé entre les extrémités correspondantes des âmes des segments 12 et 14 maintient celles-ci en appui contre l'entretoise 32.

Dans la position de repos, la distance entre le fond des encoches 36 et 38 est telle qu'un faible jeu J existe entre les extrémités des âmes 12a et 14a des segments et la pièce d'appui 28, comme on l'a représenté sur la Figure 1. En variante, on peut prévoir que les extrémités des âmes 12a et 14a soient au contact de la pièce d'appui 28 et que la distance entre le fond des encoches 36 et 38 soit supérieure d'une valeur J petite à la longueur de l'entretoise 32.

Une biellette 40 de longueur variable est disposée entre les segments 12 et 14, au voisinage du moteur de frein 22, sensiblement parallèlement à l'axe de ce dernier. Elle est équipée de moyens de réglage automatique à vis-écrou entre deux pièces terminales 40a et 40b, permettant d'accroître de façon connue la longueur de la biellette 40 pour compenser progressivement l'usure des garnitures de friction 16 et 18.

Un dispositif d'actionnement mécanique, désigné dans son ensemble par la référence 50, comporte un levier d'actionnement mécanique 60 et un levier de transmission de forces 70.

Le levier d'actionnement 60, représenté seul sur la Figure 3, est formé d'une pièce plane de forme sensiblement rectangulaire, avec une première extrémité 62 prévue pour y accrocher un câble de manoeuvre (non représenté), et une seconde extrémité 64 formant un ergot s'étendant perpendiculairement au plan du levier 60. Une ouverture 66 est formée dans le levier 60, en un point intermédiaire proche de l'extrémité 64.

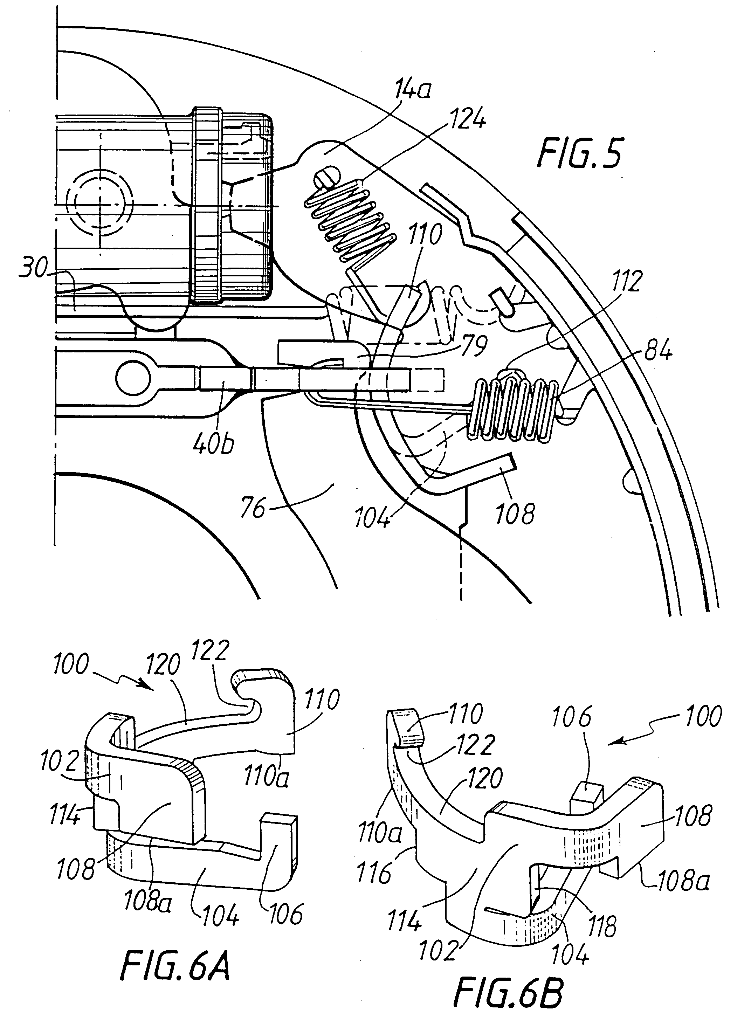

Le levier de transmission de forces 70, représenté seul sur la Figure 4, est formé d'une pièce plane de forme sensiblement rectangulaire, avec une première extrémité 72 formée avec une échancrure 74 coopérant avec l'échancrure 38 formée dans l'entretoise 32.

L'autre extrémité 76 est formée avec une partie 78 s'étendant dans un plan décalé parallèlement au plan du levier 70 d'une valeur voisine de l'épaisseur du levier 70. L'extrémité 76 comporte sur l'un de ses bords une échancrure 77 destinée à coopérer avec une échancrure correspondante formée dans la pièce terminale 40b de la biellette 40, et sur l'autre bord une protubérance 79. Le levier 70 porte un axe 80 s'étendant perpendiculairement à son plan, et une lumière 82 est formée à proximité de cet axe 80.

Comme on le voit mieux sur la Figure 2, les leviers 60 et 70 sont disposés de part et d'autre de l'âme 14a du segment 14, de telle façon que l'axe 80 du levier 70 pénètre dans l'ouverture 66 du levier 60, et que l'ergot 64 pénètre dans la lumière 82 et porte sur la tranche de l'âme 14a, les leviers 60 et 70 étant ainsi articulés l'un sur l'autre. En variante, on pourrait bien sûr prévoir de former l'axe 80 sur le levier 60 et l'ouverture 66 dans le levier 70.

Conformément à la présente invention, le frein à tambour comporte également un étrésillon, désigné dans son ensemble par la référence 100. Comme on le voit mieux sur les Figures 6A et 6B, l'étrésillon 100 comporte une partie sensiblement en arc de cercle 102, solidaire d'un bras 104, s'étendant sensiblement radialement par rapport à la partie 102, terminé par un doigt 106 s'étendant sensiblement perpendiculairement au bras 104, au voisinage du centre de courbure de la partie en arc de cercle 102.

Les extrémités 108 et 110 de la partie en arc de cercle 102 sont formées chacune avec une portée 108a et 110a respectivement, qui viennent en appui sur une face de l'âme 14a du segment 14, tandis que le bras 104 s'étend de l'autre côté de l'âme 14a, le doigt 106 pénétrant dans une ouverture 112 formée dans l'âme 14a. De la sorte, l'étrésillon 100 est rendu prisonnier du segment 14, à la façon des montages imperdables.

Entre la partie en arc de cercle 102 et le bras 104, l'étrésillon comporte une partie active 114, qui forme un prolongement axial de la partie 102 et qui est délimitée par deux bords parallèles 116 et 118. Une des extrémités 110 de la partie en arc de cercle 102 est formée avec une découpe sensiblement rectangulaire 120, dont un bord extrême 122 forme une partie d'accrochage pour la fixation d'une extrémité d'un ressort de rappel 124 dont l'autre extrémité est fixée sur l'âme 14a.

Lorsque le frein à tambour est assemblé et en position de repos ainsi qu'on l'a représenté sur les Figures 1, 5 et 7, l'étrésillon 100 est intercalé entre l'extrémité du levier 76 et l'âme 14a du segment 14, et il est sollicité par le ressort 124 dans la position représentée sur ces Figures, où le bord 116 de la partie active 114 est en butée sur la pièce terminale 40b de la biellette 40.

Dans cette position, l'échancrure 77 du levier 70 est en appui sur la pièce terminale 40b de la biellette 40, la partie active 114 de l'étrésillon 100 est en appui sur la protubérance 79 du levier 70, l'âme 14a du segment 14 est en appui sur la partie active 114, sous l'action d'un ressort de traction 84, dont les extrémités sont accrochées respectivement sur l'âme du segment 14 et sur la pièce terminale 40b. De même, la pièce terminale 40a est sollicitée vers l'âme du segment 12 par un ressort de traction 86.

On va maintenant décrire le fonctionnement du frein à tambour. Au repos, les différents éléments occupent les positions représentées sur les Figures 1, 5 et 7.

Le levier de transmission de forces 70 est en appui par l'échancrure 77 sur la biellette 40, par l'échancrure 74 sur l'entretoise 32, et par l'axe 80 sur l'âme 14a du segment 14. Le levier d'actionnement mécanique 60 est en appui par l'ouverture 66 sur l'axe 80 du levier 70, et par l'ergot 64 sur l'âme 14a.

Lors d'une mise en oeuvre hydraulique du frein, la mise sous pression du moteur de frein 22 sollicite les segments 12 et 14 radialement pour amener les garnitures de friction 16 et 18 en contact de friction avec la surface intérieure du tambour 20. Si, lors de cette mise en oeuvre, les segments 12 et 14 s'écartent d'une distance supérieure à une valeur prédéterminée du fait de l'usure des garnitures de friction 16 et 18, la biellette 40 s'allonge automatiquement, la pièce terminale 40a restant au contact de l'âme 12a sous l'action du ressort 86, et la pièce terminale 40b étant en appui sur l'extrémité 78 du levier 70, elle-même en appui sur la partie active 114 de l'étrésillon 100 en appui sur l'âme 14a sous l'action du ressort 84.

Lors d'une mise en oeuvre mécanique du frein, l'extrémité 62 du levier d'actionnement 60 est sollicitée vers la gauche en considérant la Figure 1. Le levier 60 prend alors appui par son ergot 64 sur l'âme 14a du segment 14, et l'ouverture 66 coopère avec l'axe 80 pour solliciter le levier de transmission de forces 70 également vers la gauche. L'ergot 64 se déplaçant librement dans la lumière 82 du levier 70 sollicite vers la droite le segment 14, tandis que le levier 70 sollicite vers la gauche le segment 12, par l'intermédiaire de la biellette 40 et de l'entretoise 32. Le levier 70 étant actionné par son axe 80, agit comme un palonnier sur la biellette 40 et l'entretoise 32, et joue ainsi le rôle de transmission et de répartition sur le segment 12 des forces appliquées par le levier 60 agissant sur le segment 14.

Au cours de l'utilisation du frein à tambour qui vient d'être décrit, il se produit fréquemment une usure de la surface intérieure du tambour, les garnitures de friction 16 et 18 y creusant une piste continue. Par l'action de la biellette 40 de rattrapage automatique d'usure, les garnitures de friction 16 et 18 se trouvent toujours à une distance assez faible de cette piste, de sorte qu'il peut devenir impossible de démonter le tambour de frein, pour par exemple remplacer le tambour lui-même ou les segments, ou pour des opérations d'entretien du frein.

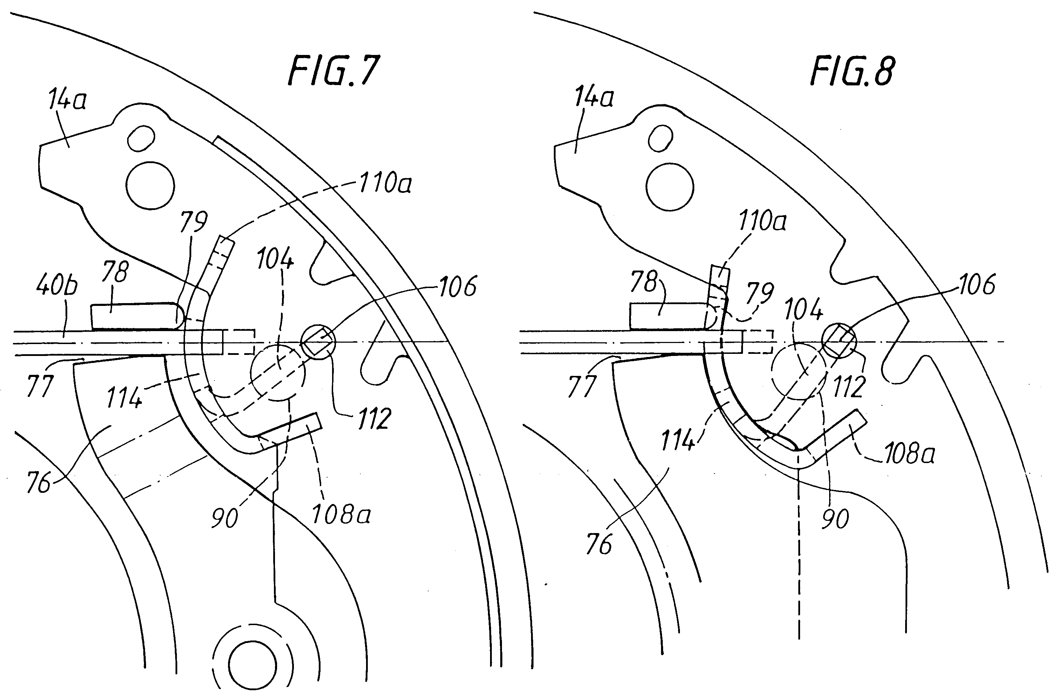

La présente invention permet de façon très simple de s'affranchir de cette difficulté. En effet, on aura compris d'après les explications qui précèdent qu'il suffit de faire basculer l'étrésillon 100, de sa première position représentée sur la Figure 7, à une deuxième position, représentée sur la Figure 8, et dans laquelle la partie active 114 se trouve éloignée de la protubérance 79 du levier 70. Le basculement dans la deuxième position est limité par la venue en butée du bord 118 de la partie active 114 sur l'âme 14a du segment 14, de façon à ce que la portée 110a reste en contact de l'âme du segment 14.

Lorsque l'étrésillon se trouve dans cette deuxième position, le ressort de traction 30 agit sur le segment 14 de façon à le rapprocher de l'autre segment 12, jusqu'à ce que l'âme 14a vienne en butée sur la protubérance 79 du levier 70. Le segment 14 se déplace ainsi sur une distance égale à l'épaisseur de la partie active 114. Cette épaisseur du matériau constituant l'étrésillon 100 sera bien sûr choisie de façon à être supérieure à la profondeur maximale tolérée pour la piste creusée par les garnitures de friction sur la surface interne du tambour 20.

De la sorte, il sera ainsi toujours possible, après avoir fait basculer l'étrésillon dans sa deuxième position, de démonter le tambour de frein pour avoir accès à ses organes constitutifs, et ainsi intervenir sur ses composants.

Le basculement de l'étrésillon entre ses deux positions se fait très simplement par rotation de celui-ci, autour du doigt 106 pénétrant dans l'ouverture 112 et formant un pivot pour l'étrésillon 100. Comme on l'a représenté, l'ouverture 112 sera avantageusement pratiquée dans l'âme 14a sensiblement dans le prolongement de la biellette 40.

Une telle rotation peut être provoquée au moyen d'un outil approprié tel qu'un tournevis. On pourra prévoir à cet effet de former une ouverture 90, comme on l'a représenté sur les Figures 7 et 8, dans la plaque support 10, au voisinage de l'extrémité du segment 14, et sensiblement dans une zone située dans la direction d'action de la biellette (40) de longueur variable, pour qu'on puisse ainsi agir sur le bras 104 de l'étrésillon et le faire tourner pour amener l'étrésillon dans sa deuxième position.

Lors de l'assemblage du frein à tambour selon l'invention, qu'il s'agisse du montage initial ou d'un remontage après intervention ou entretien, l'étrésillon est placé dans sa deuxième position, pour faciliter cet assemblage. Une fois toutes les pièces en place, il suffit alors d'actionner le frein à tambour par l'intermédiaire du dispositif d'actionnement mécanique.

En effet, lors d'un tel actionnement mécanique, et comme on l'a expliqué plus haut, le levier 60 prend appui par son ergot 64 sur l'âme 14a du segment 14 pour le solliciter vers la droite en considérant la Figure 1, et l'ouverture 66 coopère avec l'axe 80 pour solliciter le levier de transmission de forces 70 vers la gauche. L'âme 14a s'écarte ainsi du prolongement 79 sur lequel elle était en appui, jusqu'à ce que la distance entre ces deux pièces devienne au moins égale à l'épaisseur de la partie active 114 de l'étrésillon.

Dans ces conditions, le ressort 124 ramène l'étrésillon dans sa première position, jusqu'à ce que le bord 116 de la partie active 114 revienne en butée sur la partie terminale 40b de la biellette 40. Le frein à tambour est alors dans une configuration telle que décrite plus haut, permettant un actionnement aussi bien hydraulique que mécanique, avec les avantages respectifs de chacun de ces modes d'actionnement, et permettant également un démontage aisé du tambour de frein en toutes circonstances.

Bien entendu, l'invention n'est pas limitée aux modes de réalisation qui ont été décrits et représentés, mais elle est susceptible au contraire de recevoir de nombreuses modifications qui apparaîtront à l'homme du métier et qui rentrent dans le cadre des revendications annexées.

## Revendications

1. Frein à tambour comportant une plaque support (10) sur laquelle sont montés coulissants deux segments (12,14) comportant chacun une âme (12a,14a) et une jante (12b,14b) dont la face en regard du tambour (20) reçoit une garniture de friction (16,18) susceptible d'être amenée en engagement de friction contre une face interne du tambour (20) par un dispositif d'actionnement hydraulique (22) agissant sur une première extrémité des âmes (12a,14a) des segments (12,14), une biellette de longueur variable (40) déterminant, en coopération avec un ressort de traction (30), l'écartement des segments (12,14) et étant disposée au voisinage du dispositif d'actionnement hydraulique (22), une seconde extrémité des âmes (12a,14a) des segments (12,14) portant, lorsque le frein à tambour est au repos ou actionné hydrauliquement, sur une pièce d'appui (28) solidaire de la plaque support (10), le frein à tambour comportant en outre un dispositif d'actionnement mécanique (60,70) pour amener les garnitures de friction (16,18) en engagement de friction contre la face interne du tambour (20) et les âmes (12a,14a) des segments (12,14) en éloignement de la pièce d'appui (28) au moyen d'un dispositif de transmission de force (70) monté sur l'âme (14a) d'un premier segment (14) et prenant appui, lorsque le frein à tambour est actionné mécaniquement, sur l'âme (12b) d'un second segment (12) par l'intermédiaire d'une part de la biellette de longueur variable (40) et d'autre part d'un moyen de liaison (32) entre les deux segments (12,14), caractérisé en ce qu'un étrésillon (100) est disposé sur l'âme (14a) du premier segment (14) et comporte une partie active (114) interposée de façon escamotable entre la première extrémité de l'âme (14a) du premier segment (14) et une extrémité (79) du dispositif de transmission de force (70).

2. Frein à tambour selon la revendication 1, caractérisé en ce que l'étrésillon (100) est monté pivotant (106,112) sur l'âme (14a) du premier segment (14).

3. Frein à tambour selon la revendication 2, caractérisé en ce que l'étrésillon (100) est mobile entre une première position où la partie active (114) de l'étrésillon (100) est interposée entre une extrémité (79) du dispositif de transmission de force (70) et la première extrémité de l'âme (14a) du premier segment (14) dans une zone située sensiblement dans la direction d'action de la biellette (40) de longueur variable, et une deuxième position où la première extrémité de l'âme (14a) du premier segment (14) est en appui sur l'extrémité (79) du dispositif de transmission de force (70) sous l'action du ressort de traction (30).

4. Frein à tambour selon la revendication 3, caractérisé en ce que l'étrésillon (100) est sollicité dans sa première position par un ressort de rappel (124) disposé entre la première extrémité de l'âme (14a) du premier segment (14) et une partie d'accrochage (122) de l'étrésillon (100).

5. Frein à tambour selon la revendication 4, caractérisé en ce que l'étrésillon (100) comporte une partie (102) sensiblement en arc de cercle comprenant des portées (108a,110a) en appui sur une première face de l'âme (14a) du premier segment (14), et solidaire d'un bras (104) formé avec un doigt (106) formant pivot pour l'étrésillon (100) et coopérant avec une ouverture (112) pratiquée dans la première extrémité de l'âme (14a) du premier segment (14).

6. Frein à tambour selon la revendication 5, caractérisé en ce que la partie en arc de cercle (102) de l'étrésillon (100) comporte une première butée (116) coopérant, dans la première position, avec l'extrémité (40b) de la biellette de longueur variable (40).

7. Frein à tambour selon la revendication 5, caractérisé en ce que la partie en arc de cercle (102) de l'étrésillon (100) comporte une deuxième butée (118) coopérant, dans la deuxième position, avec l'âme (14a) du premier segment (14).

8. Frein à tambour selon les revendications 6 et 7, caractérisé en ce que la première (116) et la deuxième (118) butées sont formées de part et d'autre de la partie active (114) de l'étrésillon (100), qui forme un prolongement axial de la partie en arc de cercle (102).

9. Frein à tambour selon l'une des revendications 5 à 8, caractérisé en ce que les portées (108a,110a) de la partie en arc de cercle (102) et le bras (104) portant le pivot (106) de l'étrésillon (100) sont situés de part et d'autre de l'âme (14a) du premier segment (14) de façon à rendre l'étrésillon (100) prisonnier du premier segment (14).

10. Frein à tambour selon l'une quelconque des revendications précédentes, caractérisé en ce que la plaque support (10) comporte une ouverture (90) au voisinage de la première extrémité du premier segment (14) permettant le passage d'un outil pour faire passer l'étrésillon (100) de sa première position à sa deuxième position.

## Patentansprüche

1. Trommelbremse mit einer Tragplatte (10), an der zwei Bremsbacken (12, 14) gleitbeweglich angeordnet sind, die jeweils einen Steg (12a, 14a) und eine Felge (12b, 14b) enthalten, deren der Trommel (20) gegenüberliegende Seite einen Reibbelag (16, 18) aufnimmt, welcher mit einer Innenseite der Trommel (20) durch eine hydraulische Betätigungsvorrichtung (22) in Reibschluß bringbar ist, welche auf ein erstes Ende der Stege (12a, 14a) der Bremsbacken (12, 14) einwirkt, wobei eine in ihrer Länge veränderliche Druckstange (40) in Zusammenwirken mit einer Zugfeder (30) den Abstand zwischen den Bremsbacken (12, 14) bestimmt und benachbart zur hydraulischen Betätigungsvorrichtung (22) angeordnet ist, wobei ein zweites Ende der Stege (12a, 14a) der Bremsbacken (12, 14) sich dann, wenn die Trommelbremse in Ruhestellung ist oder hydraulisch betätigt wird, an einen Stützteil (28) abstützt, das fest mit der Tragplatte (10) verbunden ist, wobei die Trommelbremse ferner eine mechanische Betätigungsvorrichtung (60, 70) enthält, um die Reibbeläge (16, 18) in Reibschluß mit der Innenseite der Trommel (20) zu bringen und um die Stege (12a, 14a) der Bremsbacken (12, 14) von dem Stützteil (28) zu entfernen, und zwar mittels einer Kraftübertragungsvorrichtung (70), die am Steg (14a) einer ersten Bremsbacke (14) angebracht ist und sich dann, wenn die Trommelbremse mechanisch betätigt wird, an dem Steg (12b) einer zweiten Bremsbacke (12) abstützt, und zwar einerseits durch die längenveränderliche Druckstange (40) und andererseits durch ein Mittel (32) zum Verbinden der beiden Bremsbacken (12, 14), dadurch gekennzeichnet, daß am Steg (14a) der ersten Bremsbacke (14) eine Stütze (100) angeordnet ist und einen Wirkbereich (114) enthält, der klappbar zwischen dem ersten Ende des Stegs (14a) der ersten Bremsbacke (14) und einem Ende (79) der Kraftübertragungsvorrichtung (70) eingesetzt ist.

2. Trommelbremse nach Anspruch 1, dadurch gekennzeichnet, daß die Stütze (100) schwenkbar (106, 112) am Steg (14a) der ersten Bremsbacke (14) angebracht ist.

3. Trommelbremse nach Anspruch 2, dadurch gekennzeichnet, daß die Stütze (100) zwischen einer ersten Stellung, in der der Wirkbereich (114) der Stütze (100) zwischen ein Ende (79) der Kraftübertragungsvorrichtung (70) und dem ersten Ende des Stegs (14a) der ersten Bremsbacke (14) in einem im wesentlichen in Wirkrichtung der längenveränderlichen Druckstange (40) befindlichen Bereich eingesetzt ist, und einer zweiten Stellung beweglich ist, in der das erste Ende des Stegs (14a) der ersten Bremsbacke (14) sich an dem Ende (79) der Kraftübertragungsvorrichtung (70) unter der Wirkung der Zugfeder (30) abstützt.

4. Trommelbremse nach Anspruch 3, dadurch gekennzeichnet, daß die Stütze (100) in ihre erste Stellung von einer Rückholfeder (124) beaufschlagt wird, die zwischen dem ersten Ende des Stegs (14a) der ersten Bremsbacke (14) und einem Einhängeabschnitt (122) der Stütze (100) angeordnet ist.

5. Trommelbremse nach Anspruch 4, dadurch gekennzeichnet, daß die Stütze (100) einen im wesentlichen kreisbogenförmigen Abschnitt (102) enthält, welcher Auflageflächen (108a, 110a) aufweist, die sich an einer ersten Seite des Stegs (14a) der ersten Bremsbacke (14) abstützen und fest mit einem Schenkel (104) verbunden sind, der mit einem Zapfen (106) gebildet ist, welcher einen Drehzapfen für die Stütze (100) darstellt und mit einer Öffnung (112) zusammenwirkt, die im ersten Ende des Stegs (14a) des ersten Bremsbacke (14) ausgebildet ist.

6. Trommelbremse nach Anspruch 5, dadurch gekennzeichnet, daß der kreisbogenförmige Abschnitt (102) der Stütze (100) einen ersten Anschlag (116) enthält, der in der ersten Stellung mit dem Ende (40b) der längenveränderlichen Druckstange (40) zusammenwirkt.

7. Trommelbremse nach Anspruch 5, dadurch gekennzeichnet, daß der kreisbogenförmige Abschnitt (102) der Stütze (100) einen zweiten Anschlag (118) enthält, der in der zweiten Stellung mit dem Steg (14a) der ersten Bremsbacke (14) zusammenwirkt.

8. Trommelbremse nach Anspruch 6 und 7, dadurch gekennzeichnet, daß der erste Anschlag (116) und der zweite Anschlag (118) auf jeweils einer Seite des Wirkbereichs (114) der Stütze (100) ausgebildet sind, der eine axiale Verlängerung des kreisbogenförmigen Abschnitts (102) bildet.

9. Trommelbremse nach einem der Ansprüche 5 bis 8, dadurch gekennzeichnet, daß die Auflageflächen (108a, 110a) des kreisbogenförmigen Abschnitts (102) und der den Drehzapfen (106) der Stütze (100) tragende Schenkel (104) sich auf jeweils einer Seite des Stegs (14a) der ersten Bremsbacke (14) so befinden, daß die Stütze (100) von der ersten Bremsbacke (14)nicht abnehmbar ist.

10. Trommelbremse nach einem der vorhergehenden Ansprüche, dadurch gekennzeichnet, daß die Tragplatte (10) eine Öffnung (90) enthält, die benachbart zum ersten Ende der ersten Bremsbacke (14) ausgebildet ist und das Durchführen eines Werkzeugs ermöglicht, um die Stütze (100) aus ihrer ersten Stellung in ihre zweite Stellung zu bringen.

## Claims

1. Drum brake including a carrier plate (10) on which there are slidably mounted two shoes (12, 14) each one including a web (12a, 14a) and a rim section (12b, 14b) of which the face opposite the drum (20) receives a friction lining (16, 18) capable of being brought into frictional engagement against an internal face of the drum (20) by a hydraulic actuation device (22) acting on a first end of the webs (12a, 14a) of the shoes (12, 14), a variable-length strut (40) which, in interaction with a tension spring (30), determines the separation of the shoes (12, 14) and which is located in the vicinity of the hydraulic actuation device (22), a second end of the webs (12a, 14a) of the shoes (12, 14) bearing, when the drum brake is at rest or hydraulically actuated, on a bearing piece (28) integral with the carrier plate (10), the drum brake further comprising a mechanical actuation device (60, 70) for bringing the friction linings (16, 18) into frictional engagement against the internal face of the drum (20) and the webs (12a, 14a) of the shoes (12, 14) away from the bearing piece (28) by means of a force-transmission device (70) mounted on the web (14a) of a first shoe (14) and bearing, when the drum brake is mechanically actuated, on the web (12b [sic]) of a second shoe (12) by means, on the one hand, of the variable-length strut (40) and, on the other hand, of a means (32) for joining the two shoes (12, 14) together, characterized in that a brace (100) is located on the web (14a) of the first shoe (14) and includes an active part (114) interposed retractably between the first end of the web (14a) of the first shoe (14) and one end (79) of the force-transmission device (70).

2. Drum brake according to Claim 1, characterized in that the brace (100) is mounted so that it can pivot (106, 112) on the web (14a) of the first shoe (14).

3. Drum brake according to Claim 2, characterized in that the brace (100) can move between a first position in which the active part (114) of the brace (100) is interposed between one end (79) of the force-transmission device (70) and the first end of the web (14a) of the first shoe (14) in a zone located substantially in the direction of action of the variable-length strut (40), and a second position in which the first end of the web (14a) of the first shoe (14) bears on the end (79) of the force-transmission device (70) under the action of a tension spring (30).

4. Drum brake according to Claim 3, characterized in that the brace (100) is urged into its first position by a return spring (124) located between the first end of the web (14a) of the first shoe (14) and a hooking part (122) of the brace (100).

5. Drum brake according to Claim 4, characterized in that the brace (100) includes a part (102) substantially in the shape of an arc of a circle comprising bearing surfaces (108a, 110a) bearing on a first face of the web (14a) of the first shoe (14), and integral with an arm (104) formed with a finger (106) forming a pivot for the brace (100) and interacting with an opening (112) made in the first end of the web (14a) of the first shoe (14).

6. Drum brake according to Claim 5, characterized in that the part (102) of the brace (100) which is in the shape of an arc of a circle includes a first limit stop (116) which, in the first position, interacts with the end (40b) of the variable-length strut (40).

7. Drum brake according to Claim 5, characterized in that the part (102) of the brace (100) which is in the shape of an arc of a circle includes a second limit stop (118) which, in the second position, interacts with the web (14a) of the first shoe (14).

8. Drum brake according to Claims 6 and 7, characterized in that the first (116) and second (118) limit stops are formed on either side of the active part (114) of the brace (100), which forms an axial extension of the part (102) in the shape of an arc of a circle.

9. Drum brake according to one of Claims 5 to 8, characterized in that the bearing surfaces (108a, 110a) of the part (102) in the shape of an arc of a circle and the arm (104) carrying the pivot (106) of the brace (100) are situated on either side of the web (14a) of the first shoe (14) so as to render the brace (100) captive by the first shoe (14).

10. Drum brake according to any one of the preceding claims, characterized in that the carrier plate (10) includes an opening (90) in the vicinity of the first end of the first shoe (14) allowing passage of a tool for moving the brace (100) from its first position to its second position.
